# EUROPÄISCHE PATENTSCHRIFT

(11) **EP 0 917 377 B1**
(45) Veröffentlichungstag und Bekanntmachung des Hinweises auf die Patenterteilung: **04.07.2007**
(21) Anmeldenummer: 98115365.3
(22) Anmeldetag: 14.08.1998
(51) Int. Cl.: H04Q 1/14, H04M 3/22

(54) **Verfahren zur Verwaltung und Dokumentation von Kontaktstellen eines Verdrahtungsnetzes**
Method for managing and documentation of contact points of a wiring network
Méthode de gestion et de documentation de points de contacts d'un réseau d'interconnection

(30) Priorität: 11.11.1997 DE 19749929
(43) Veröffentlichungstag der Anmeldung: 19.05.1999
(73) Patentinhaber: CCS Technology, Inc., Wilmington, DE 19803 (US)
(72) Erfinder: Cremer, Cornelius, 85586 Poing (DE); Brenner, Wolfgang, 82223 Eichenau (DE)
(74) Vertreter: Sturm, Christoph

(56) Entgegenhaltungen:
- EP-A- 0 575 100
- EP-A- 0 700 193
- EP-A- 0 719 058
- FR-A- 2 751 103
- GB-A- 2 236 398
- US-A- 5 523 747

## Beschreibung

Bei der Erfindung handelt es sich um ein Verfahren zur Verwaltung und Dokumentation von Kontaktstellen eines Verdrahtungsnetzes in einer elektrischen Verzweigungsanlage.

Aus DE 43 33 121 - C3 ist eine Ortungseinrichtung mit einem Magnetometer bekannt, mit der im Erdreich verlegte langgestreckte Gegenstände geortet werden können. Hierfür werden detektierbare Geberelemente am langgestreckten Gegenstand, zum Beispiel an einem Kabel, oder entlang desselben angeordnet, die mit Hilfe eines entsprechenden Empfängers erfaßt werden. Aufgrund dieser Daten kann dann der Verlauf des langgestreckten Gegenstandes ermittelt und dokumentiert werden. Als Geberelemente können dort auch elektronische Bauelemente in einem Chip realisiert werden, der sowohl aktive elektronische Bauelemente als auch Speichermittel enthält.

Die US 5,523,747 betrifft ein Kabelmanagementsystem für ein Computernetzwerk. Über eine Identifikationseinrichtung können Verbindungen im Computernetzwerk verwaltet und dokumentiert werden.

Hinsichtlich weiteren Standes der Technik sei auf die EP 0 719 058 A2, die GB 2 236 398 A sowie auf die EP 0 700 193 A2 verwiesen.

Für vorliegende Erfindung liegt die Aufgabe zugrunde, ein Verfahren zu schaffen, mit dessen Hilfe in einfacher, sicherer Weise mit geringem Zeitaufwand ein Verdrahtungsnetz einer elektrischen Verzweigungsanlage erstellt werden kann. Die gestellte Aufgabe wird mit einem Verfahren der eingangs erläuterten Art dadurch gelöst, daß elektronische Informationseinheiten mit Speichereinheiten an den Kontaktstellen des Verdrahtungsnetzes eingesetzt werden, daß den elektronischen Informationseinheiten abrufbare, für die Erstellung eines Verdrahtungsplanes erforderliche Informationen eingegeben werden, daß die elektronischen Informationseinheiten mittels eines Computers per Adresse erfaßt werden, daß anschließend ein Verdrahtungsplan mit den erfaßten Informationen erstellt wird und daß die Eingänge und Ausgänge einer Verbindung dokumen-tiert und in den elektronischen Informationseinheiten als abrufbare Daten gespeichert werden.

Mit Hilfe des erfindungsgemäßen Verfahrens ist es nun möglich, eine einfache und sichere Verwaltung und damit auch den Betrieb von Verteilergestellen in Verdrahtungsnetzen abzuwickeln. Besonders vorteilhaft ist dabei, daß auch bei sehr großen Verzweigungsanlagen, wie zum Beispiel bei Hauptverteilern (HVT) von Nachrichtenübertragungsnetzen, die Verdrahtungspläne mit den Ein- und Ausgangsstellen dokumentiert und jederzeit durch einfachen elektronischen Zugang aktualisiert werden können. Dies ist ein besonders wichtiger Gesichtspunkt, denn nur der fehlerfreie und jederzeit aktuelle Datenbestand sichert einen einwandfreien Betrieb, auch dann, wenn Probleme im Verdrahtungsnetz auftreten sollten. Bisher werden lediglich Listen über Verbindungen der system- und teilnehmerseitigen Nachrichtenleitungspaare erstellt. Die Richtigkeit hängt dabei immer von der Pflege dieser Listen ab. Gemäß der Erfindung kann nun durch Abruf von Daten, die in elektronischen Informationseinheiten an den Kontaktstellen gespeichert sind, ein Verdrahtungsplan automatisch erstellt werden. Die elektronischen Informationseinheiten sind intelligente" Kontaktstellen in Form von elektronischen Baueinheiten in sogenannten Chips, die von einem Computer aus adressierbar sind. Dabei erfolgt der nötige Informationsaustausch. Bei einem Verteiler eines Nachrichtennetzes sind dann mindestens die Eingangspaare auf der Vermittlerseite und die Ausgangspaare auf der Teilnehmerseite adressierbar. Damit sind die jeweils verbundenen Paare dokumentiert. Durch Abfragen aller Kontaktstellen der Ein- und Ausgangsseite kann somit ein fehlerfreier Verdrahtungsplan erstellt werden und auch aktualisiert bleiben.

Die Stromversorgung der elektronischen Informationseinheiten (Chips) kann dabei eventuell über das Zweidrahtnetz geschehen. Die elektronischen Informationseinheiten werden durch Schutzschaltungen vor Spannungs- und Stromstößen, die zum Beispiel bei Blitzeinschlägen induziert werden können, in geeigneter Weise geschützt, so daß die Funktion des Nachrichtennetzes nicht beeinträchtigt wird.

Es werden bei einem derartig "intelligenten" Verdrahtungsnetz gemäß der Erfindung außer den elektronischen Informationseinheiten auch andere Ausführungen von Kontaktstellen verwendet, wie zum Beispiel Stecker, die auf die Kontaktstellen aufgesteckt werden. Hierfür werden auch Mehrfachstecker vorgesehen, so daß auch eine ganze Schaltleiste auf einmal kontaktiert wird.

Auch die kontaktlose Abfrage über Funk, Infrarot (IR) - Sender können im Rahmen der Erfindung verwendet werden.

Weiterhin ist auch ein Zugang von der Zentralstelle, zum Beispiel von einem Vermittlungsamt aus möglich, wobei die Signale über das Zweidrahtsystem eingegeben werden. Dabei ist durch geeignete Modulation eine Trennung der Signale von der normalen Nachrichtenübertragung vorgenommen. So kann zum Beispiel diese Datenkommunikation auch stattfinden, wenn gerade kein Verkehr auf der Zweidrahtverbindung läuft. Bei einer solchen Version ist dann die "intelligente" Verzweigungsanlage bzw. der Verteiler auch gleichzeitig Teil eines "intelligenten" Netzes, daß auch vom Amt über einen Hauptverteiler (HVC) zu weiteren Verzweigern, Verteilern, Muffen bis zum Endteilnehmer erstrecken kann.

Bei der Anordnung zur Durchführung des erfindungsgemäßen Verfahrens müssen zwischen den elektronischen Informationseinheiten der Ein- und Ausgangsseiten entsprechende Kommunikationen bestehen, so daß die jeweils gültige Adresse der benachbarten elektronischen Informationseinheit immer aktuell ist. Eine solche Kommunikation erfolgt jeweils über das Zweidrahtnetz, wobei immer die Signale für diese Kommunikation vom normalen Informationsverkehr getrennt ist. Beispielsweise kann für eine solche Kommunikation ein bisher für den Daten-Sprach-und Serviceverkehr nicht benutzter Frequenzbereich unterhalb von 10 Hertz (Hz) benutzt werden.

Die elektronischen Informationseinheiten übernehmen bei diesen Anordnungen unter anderem die Funktionen für eine Fehlerlokalisierung eines eventuell gestörten Verdrahtungsnetzes und sind zum Beispiel Teil einer Netzüberwachung von der Zentrale aus. In diesen Informationseinheiten werden die Nachbaradressen bzw. alle adressierbaren Orte in der Übertragungslinie vom Amt bis zum Teilnehmer gespeichert. Dadurch ergibt sich auch die Möglichkeit zur Speicherung einer Umrangierhistorie, einer Montageanleitung und weiterer Informationen zum Netz und zur Umgebung wie zum Beispiel Daten über Temperatur, Feuchtigkeit und anderes mehr.

Die Erfindung wird anhand von drei Figuren näher erläutert.
- Figur 1: verdeutlicht ein Beispiel für eine Abfrage an einem Hauptverteiler.
- Figur 2: verdeutlicht ein Beispiel für eine kontaktlose Abfrage.
- Figur 3: verdeutlicht ein Beispiel für Fernabfrage.

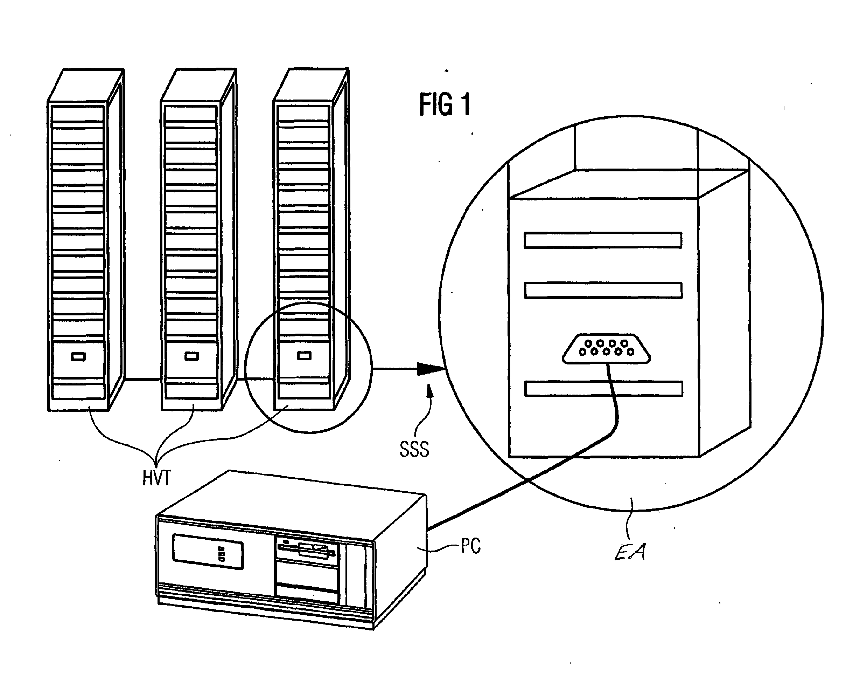

In Figur 1 ist eine Anordnung von Kontaktstellen eines Verdrahtungsnetzes in Form an sich bekannter Hauptverteiler HVT dargestellt, die elektronische Informationseinheiten enthalten. Über eine serielle Schnittstelle SSS können die elektronischen Informationseinheiten z.B. in Form von Chips mit Hilfe eines Computers PC über eine Ein-Ausgabeeinheit EA aufgerufen werden. Die beschriebenen Daten können nun eingegeben, gespeichert und gelesen werden, so daß hierüber jeweils der aktuelle Stand des Verdrahtungsnetzes ermittelt werden kann.

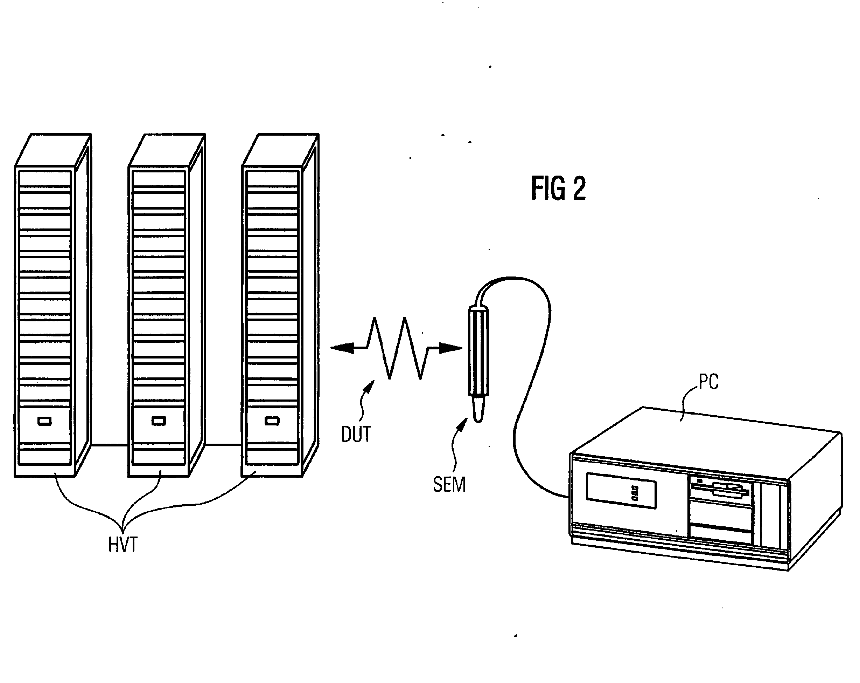

In Figur 2 ist skizziert, daß die Abfrage und Eingabe der im Verdrahtungsnetz bzw. den Hauptverteilern HVT nötigen Daten über einen Sende- und Empfangsmodul SEM auch kontaktlos erfolgen kann. Die Übertragung der Daten DUT erfolgt z.B. mit Funk- oder Infrarot-Verfahren, wobei die Daten wiederum von einem Computer PC eingegeben, gelesen und verarbeitet werden. Die Übertragungsweite ist dabei relativ gering.

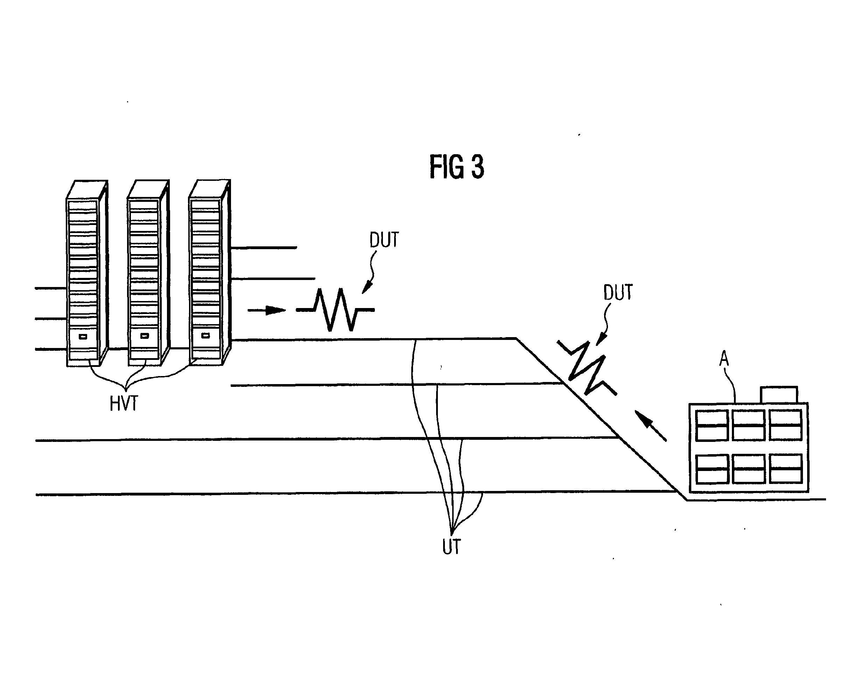

Figur 3 verdeutlicht die Übertragung der Daten DUT zwischen dem Amt A und den Hauptverteilern HVT über die bestehenden Leitungen UT für die Nachrichtenübertragungen, wobei der Frequenzbereich für die Signalübertragung auch unterhalb von 10 Hz verwendet werden kann. Die Übertragung der Daten DUT erfolgt dabei in beiden Richtungen.

## Patentansprüche

1. Verfahren zur Verwaltung und Dokumentation von Kontaktstellen, nämlich von Eingangspaaren auf einer Vermittlungsseite und von Ausgangspaaren auf einer Teilnehmerseite, eines Verdrahtungsnetzes aus systemseitigen und teilnehmerseitigen Nachrichtenleitungspaaren in einem Hauptverteiler eines Nachrichtenübertragungsnetzes,
**dadurch gekennzeichnet, dass**:
a) elektronische Informationseinheiten mit Speichereinheiten an den Kontaktstellen des Verdrahtungsnetzes eingesetzt werden, wobei die elektronischen Informationseinheiten durch Überspannungs- und/oder Überstromableiter geschützt werden,
b) den elektronischen Informationseinheiten abrufbare, für die Erstellung eines Verdrahtungsplans der Eingangspaare und Ausgangspaare erforderliche Informationen eingegeben werden,
c) die elektronischen Informationseinheiten mittels eines Computers per Adresse erfasst werden,
d) anschließend ein Verdrahtungsplander Eingangspaare und Ausgangspaare mit den erfassten Informationen erstellt wird, und
e) die Eingangspaare und Ausgangspaare einer Verbindung aus systemseitigen und teilnehmerseitigen Nachrichtenleitungspaaren dokumentiert und in den elektronischen Informationseinheiten als abrufbare Daten gespeichert werden.

2. Verfahren nach Anspruch 1,
**dadurch gekennzeichnet, dass**
elektronische Schaltkreise in Form von Chips als elektronische Informationseinheiten verwendet werden, und dass die Stromversorgung der Chips über die Nachrichtenleitungspaare des Verdrahtungsnetzes hergestellt wird.

3. Verfahren nach einem der vorhergehenden Ansprüche,
**dadurch gekennzeichnet, dass**
Verdrahtungsänderungen in den Speichereinheiten jeweils aktualisiert werden.

4. Verfahren nach einem der vorhergehenden Ansprüche,
**dadurch gekennzeichnet,dass**
die Kontaktierungen der elektronischen Informationseinheiten zum Computer durch Aufstecken eines Steckers hergestellt werden.

5. Verfahren nach einem der Ansprüche 1 bis 4,
**dadurch gekennzeichnet, dass**
die Abfragen der elektronischen Informationseinheiten drahtlos vorgenommen werden.

6. Verfahren nach einem der Ansprüche 1 bis 4,
**dadurch gekennzeichnet, dass**
die Kommunikation zu den elektronischen Informationseinheiten im Hauptverteiler von einem Vermittlungsamt für Nachrichtenübertragungen über Leitungen mit moduliertem Signalverkehr vorgenommen wird.

7. Verfahren nach Anspruch 6,
**dadurch gekennzeichnet, dass**
der Frequenzbereich für die Signalübertragung unterhalb von 10 Hz verwendet wird.

8. Verfahren nach einem der vorhergehenden Ansprüche,
**dadurch gekennzeichnet,dass**
an den elektronischen Informationseinheiten Messergebnisse von angeschlossenen Messschaltungen für die Messung von Temperatur und/oder Feuchtigkeit und/oder Widerstand abgefragt werden.

## Claims

1. Method for managing and documenting contact points, namely input pairs at an exchange end and output pairs at a subscriber end, in a wiring network comprising system-end and subscriber-end message conduit pairs in a main distribution frame in a telecommunication network,
**characterized in that**:
a) electronic information units having memory units are used at the contact points in the wiring network, the electronic information units being protected by surge and/or current arresters,
b) retrievable information which is required for creating a wiring diagram for the input pairs and output pairs is input into the electronic information units,
c) the electronic information units are detected by address using a computer,
d) a wiring diagram for the input pairs and output pairs is then created using the detected information, and
e) the input pairs and output pairs for a connection comprising system-end and subscriber-end message conduit pairs are documented and are stored in the electronic information units as retrievable data.

2. Method according to Claim 1,
**characterized in that**
electronic circuits in the form of chips are used as electronic information units, and **in that** the power supply for the chips is produced by means of the message conduit pairs in the wiring network.

3. Method according to one of the preceding claims,
**characterized in that**
wiring changes are respectively updated in the memory units.

4. Method according to one of the preceding claims,
**characterized in that**
the points of contact between the electronic information units and the computer are made by plugging on a connector.

5. Method according to one of Claims 1 to 4,
**characterized in that**
the electronic information units are interrogated wirelessly.

6. Method according to one of Claims 1 to 4,
**characterized in that**
the communication with the electronic information units in the main distribution frame is conducted by an exchange for message transmissions via lines with the modulated signal traffic.

7. Method according to Claim 6,
**characterized in that**
the frequency range used for the signal transmission is below 10 Hz.

8. Method according to one of the preceding claims,
**characterized in that**
the electronic information units are interrogated for measurement results from connected measurement circuits for measuring temperature and/or moisture and/or resistance.

## Revendications

1. Procédé de gestion et de documentation de points de contact, à savoir de paires d'entrée sur un côté transmission et de paires de sortie sur un côté abonné d'un réseau câblé composé de paires de lignes d'information côté système et côté abonné dans un répartiteur principal d'un réseau de transmission d'informations, **caractérisé en ce que**
a) des unités d'information électroniques comprenant des unités de mémoire sont utilisées au niveau des points de contact du réseau câblé, les unités d'information électroniques étant protégées par des déclencheurs sur surtension et/ou sur surintensité,
b) les informations consultables et nécessaires pour l'établissement d'un plan de câblage des paires d'entrée et des paires de sortie sont entrées dans les unités d'information électroniques,
c) les unités d'information électroniques sont détectées par adresse au moyen d'un ordinateur,
d) un plan de câblage des paires d'entrée et des paires de sortie est ensuite établi avec les informations acquises et
e) les paires d'entrée et les paires de sortie documentent une liaison composée de paires de lignes d'information côté système et côté abonné et sont enregistrées dans les unités d'information électroniques sous la forme de données consultables.

2. Procédé selon la revendication 1, **caractérisé en ce que** les unités d'information électroniques employées sont des circuits de commutation électroniques sous forme de puces et que l'alimentation électrique des puces est établie par le biais des paires de lignes d'information du réseau câblé.

3. Procédé selon l'une des revendications précédentes, **caractérisé en ce que** les modifications du câble sont à chaque fois mises à jour dans les unités de mémoire.

4. Procédé selon l'une des revendications précédentes, **caractérisé en ce que** l'établissement des contacts des unités d'information électroniques avec l'ordinateur est réalisé par emmanchement d'une fiche.

5. Procédé selon l'une des revendications 1 à 4, **caractérisé en ce que** les interrogations des unités d'information électroniques s'effectuent sans fil.

6. Procédé selon l'une des revendications 1 à 4, **caractérisé en ce que** la communication avec les unités d'information électroniques dans le répartiteur principal est réalisée par un central de commutation pour la transmission d'informations sur des lignes avec trafic modulé des signaux.

7. Procédé selon la revendication 6, **caractérisé en ce que** la plage de fréquences au-dessous de 10 Hz est utilisée pour la transmission de signal.

8. Procédé selon l'une des revendications précédentes, **caractérisé en ce que** les résultats de mesure des circuits de mesure connectés pour la mesure de la température et/ou de l'humidité et/ou de la résistance sont interrogés au niveau des unités d'information électroniques.
